# EUROPÄISCHE PATENTSCHRIFT

(11) **EP 1 082 934 B1**
(45) Veröffentlichungstag und Bekanntmachung des Hinweises auf die Patenterteilung: **20.10.2004**
(21) Anmeldenummer: 00117583.5
(22) Anmeldetag: 16.08.2000
(51) Int. Cl.: A47K 1/09, F16B 47/00

(54) **Ablage-Vorrichtung**
Tray
Tablette

(30) Priorität: 08.09.1999 DE 29915815 U
(43) Veröffentlichungstag der Anmeldung: 14.03.2001
(73) Patentinhaber: Roman Dietsche GmbH & Co. KG, 79674 Todtnau-Aftersteg (DE)
(72) Erfinder: Karle, Max, 79117 Freiburg i. Br. (DE); Maier, Heinz, 79674 Todtnau (DE)
(74) Vertreter: Rau, Albrecht

(56) Entgegenhaltungen:
- EP-A- 0 775 462
- DE-A- 19 755 063
- GB-A- 1 223 738
- GB-A- 2 247 910
- US-A- 5 348 168

## Beschreibung

Die Erfindung betrifft eine Ablage-Vorrichtung für Gegenstände, insbesondere für Badezimmer-Gegenstände, gemäß dem Oberbegriff des Anspruches 1.

Durch offenkundige Vorbenutzung ist bekannt, Saughaken für Küchen und Bäder derart auszubilden, daß ein Saug-Napf mit einem Befestigungs-Arm ausgebildet ist, der durch eine Öffnung einer Stütz-Halbschale verschiebbar geführt ist. An dem freien Ende des Befestigungs-Arms ist eine Durchgangs-Bohrung vorgesehen. Ein Haken ist mit einem durch die Bohrung gesteckten Zapfen mit dem Befestigungs-Arm verbunden und um diesen verschwenkbar. Zur Saughalterung des Hakens an der Wand wird dieser an die Wand angesetzt und der Haken um 90° verschwenkt. Dadurch wird der Saug-Napf von der Wand mittig abgezogen, so daß im Zwischenbereich ein Unterdruck entsteht. Nachteilig hieran ist, daß der Zapfen leicht verloren geht, was vor allem für die Reinigung des Saughakens, die am besten in einem Waschbecken oder in einer Geschirrspülmaschine erfolgt, nachteilig ist.

Aus der GB 2 247 910 A ist eine Ablage-Vorrichtung für Badezimmer-Gegenstände bekannt. Diese umfasst ein Saug-Element zur Saughalterung an einer Wand und einen Ablage-Körper. Ein Befestigungs-Arm des Saug-Elementes ist über einen Gelenkstift an dem Ablage-Körper angelenkt. Eine Verschwenkung des Ablage-Körpers hat eine Beeinflussung der Saugfunktion des Saug-Napfes des Saug-Elementes zur Folge. Nachteilig bei dieser bekannten Ablage-Vorrichtung ist der äußerst hohe MontageAufwand zur Herstellung der Verbindung zwischen dem Ablage-Körper und dem Befestigungs-Arm des Saug-Elementes.

Aus der DE 197 55 063 A1 ist eine Halte-Vorrichtung für Gegenstände bekannt. Diese umfasst einen Ablage-Körper zur Aufnahme von Gegenständen, der durch ein Saug-Element an einem glatten Trägerkörper anbringbar ist. Ein Befestigungs-Arm steht mit einem Saug-Napf des Saug-Elementes in Verbindung und ist gelenkig mit dem Ablage-Körper verbunden. Die Anlenkung des Ablage-Körpers an dem Befestigungs-Arm erfolgt über einen Gelenkstift. Eine Verschwenkung des Ablage-Körpers beeinflusst die Saugfunktion des Saug-Napfes. Auch bei dieser bekannten Vorrichtung ist die Montage beschwerlich.

Aus der US 5,348,168 sind mehrere Ablage- bzw. Halte-Vorrichtungen für Badezimmer-Gegenstände bekannt. Diese sind mittels Saug-Elementen an Wänden anbringbar.

Aus der EP 0 775 462 A2 ist eine an einer Wand zu montierende Haltestange bekannt. Diese ist mit zwei Saug-Elementen versehen, welche jeweils einen Saug-Napf und einen mit dem Saug-Napf verbundenen Befestigungs-Arm aufweisen. An Stütz-Halbschalen der Saug-Elemente sind jeweils Lagerstege zur Lagerung eines auf den Befestigungs-Arm wirkenden Nocken-Körpers angeformt. Die Lagerung des Nocken-Körpers erfolgt über einen Gelenkstift, der den Nocken-Körper durchdringt und in Ausnehmungen der Lagerstege ragt. Eine Verschwenkung des Nocken-Körpers über eine abnehmbare Betätigungsstange beeinflusst die Saugwirkung der Saug-Näpfe. Zur Montage dieser Haltestange ist eine Vielzahl von Montageschritten erforderlich.

Aus der GB 1 223 738 ist eine Ablage-Vorrichtung für Badezimmer-Gegenstände bekannt. Diese umfasst einen an einer Wand zu befestigenden Tragarm, der von einem Ablage-Körper umgeben ist. An der Unterseite des Tragarmes ist eine Feder mit einem Rastabschnitt angebracht. Der Rastabschnitt der Feder steht in Eingriff mit einer in dem Ablage-Körper ausgebildeten Rastausnehmung. Die Feder ist durch Druckbeaufschlagung verschwenkbar. Eine lösbare Befestigung des Tragarms an der Wand ist nicht vorgesehen.

Der Erfindung liegt die Aufgabe zugrunde, eine Ablage-Vorrichtung für Gegenstände bereitzustellen, die möglichst leicht an einer Wand befestigt bzw. von dieser entfernt werden kann, gleichzeitig möglichst haltbar ist und äußerst einfach zusammengebaut werden kann.

Die Aufgabe wird durch die Merkmale des Anspruches 1 gelöst.

Weitere Vorteile und Einzelheiten der Erfindung ergeben sich aus den Unteransprüchen.

Zusätzliche Merkmale und Einzelheiten der Erfindung ergeben sich aus der Beschreibung eines Ausführungsbeispiels anhand der Zeichnung. Es zeigen:
- Fig. 1: eine Draufsicht auf eine Ablage-Vorrichtung in der Gebrauchs-Position,
- Fig. 2: eine Schnittdarstellung gemäß der Schnittlinie II-II in Fig. 1,
- Fig. 3: eine Ansicht gemäß Fig. 2 der Ablage-Vorrichtung in der Montageposition,
- Fig. 4: eine Ausschnittvergrößerung der Darstellung gemäß Fig. 2,
- Fig. 5: eine Schnittdarstellung gemäß der Schnittlinie V-V in Fig. 4,
- Fig. 6: einen Querschnitt eines Einführ-Kanals,
- Fig. 7: eine Draufsicht auf ein Verbindungs-Element in ebener Anordnung, und
- Fig. 8: eine Draufsicht auf das Verbindungs-Element gemäß Fig. 7 in Montageanordnung.

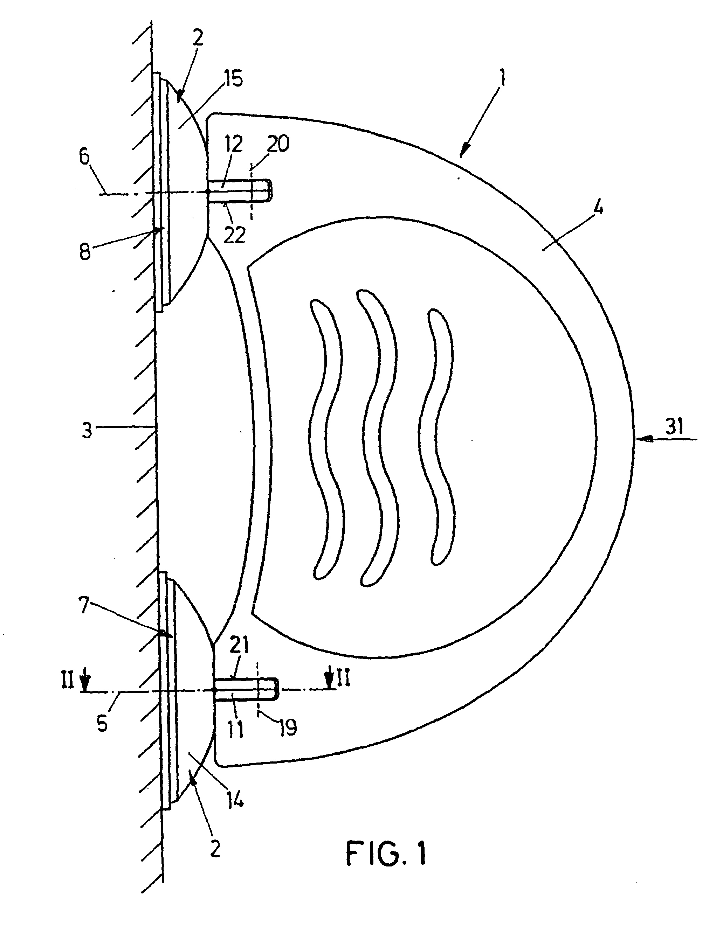

Eine Ablage-Vorrichtung 1 für Gegenstände, insbesondere Badezimmer-Gegenstände, weist zwei Saug-Elemente 2 zur Saughalterung an einer Wand 3 sowie einen mit diesen schwenkbar verbundenen Ablage-Körper 4 auf. Die Oberfläche der Wand 3 sollte glatt und möglichst gasundurchlässig ausgebildet sein, damit eine Saughalterung an ihr möglich ist. Der Ablage-Körper 4 kann, wie in Fig. 1 gezeigt, die Form einer Seifenschale, eines Zahnputzbecherhalters oder auch eines oder mehrerer Haken haben.

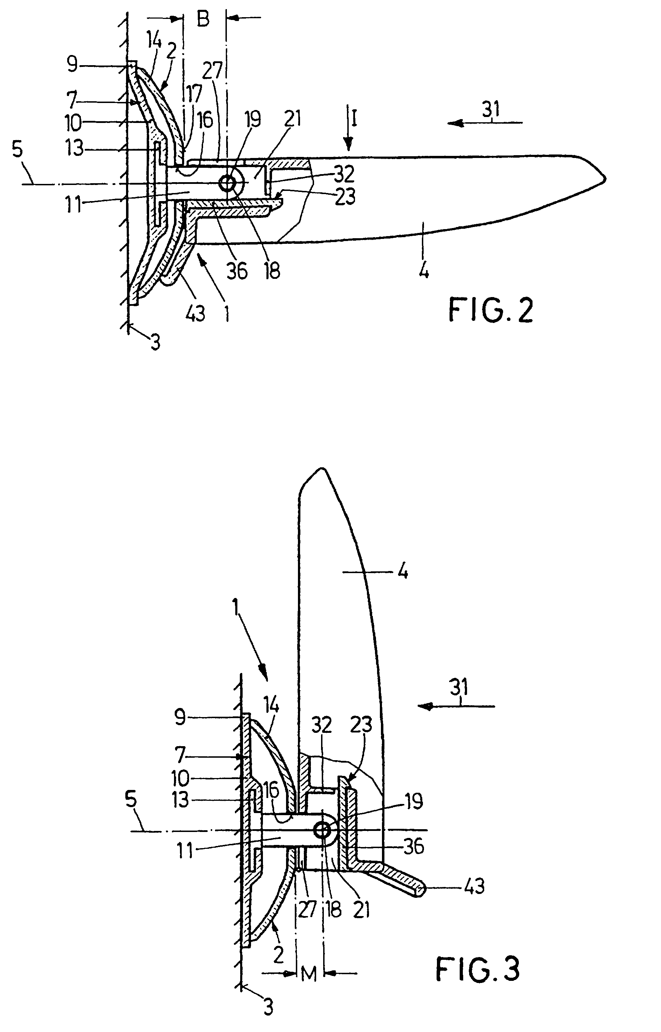

Die Saug-Elemente 2 weisen jeweils einen bezüglich einer Mittel-Längs-Achse 5 bzw. 6 rotationssymmetrischen Saug-Napf 7 bzw. 8 auf, welcher aus einem elastischen Material, insbesondere einem entsprechenden Kunststoff, wie z. B. Weich-PVC, gefertigt ist. Die Saug-Näpfe 7, 8 weisen einen ringförmigen Abschnitt 9 auf, der im an die Wand 3 angesaugten Zustand in gasdichter Verbindung mit der Wand 3 ist und einen Mittel-Abschnitt 10 auf, der im an die Wand 3 angesaugten, in Fig. 2 dargestellten, Zustand nicht in Kontakt mit der Wand 3 ist. Die Saug-Näpfe 7 und 8 weisen jeweils konzentrisch zur Mittel-Längs-Achse 5 bzw. 6 einen Befestigungs-Arm 11 bzw. 12 auf, der mit den Saug-Näpfen 7 bzw. 8 verbunden ist und vorzugsweise aus Polyamid besteht. Hierzu ist an dem den Saug-Näpfen 7 bzw. 8 zugewandten Ende eine kreisförmige Sockel-Platte 13 einteilig mit den Befestigungs-Armen 11 bzw. 12 ausgebildet. Die Sockel-Platte 13 ist von dem Material der Saug-Näpfe 7 bzw. 8 umgeben. Diese Anordnung wird durch Umspritzen der Sockel-Platten 13 bei der Herstellung der Saug-Näpfe 7 bzw. 8 hergestellt. Die Befestigungs-Arme 11 bzw. 12 sind im Vergleich zu den Saug-Näpfen 7 bzw. 8 weniger elastisch ausgebildet. Die Saug-Elemente 2 weisen ferner jeweils eine Stütz-Halbschale 14 bzw. 15 auf, die bezüglich den Mittel-Längs-Achsen 5 bzw. 6 rotationsymmetrisch und nach Art eines Kugelschalenabschnitts gekrümmt ausgebildet ist und eine Führungsöffnung 16 zur verschiebbaren Durchführung der Befestigungs-Arme 11 bzw. 12 aufweist. Die Stütz-Halbschalen 14 bzw. 15 sind im Vergleich zu den Saug-Näpfen 7 bzw. 8 weniger elastisch ausgebildet.

Der über die Saug-Näpfe 7 bzw. 8 vorstehende Teil der Befestigungs-Arme 11 bzw. 12 weist wie die Führungsöffnung 16 einen rechteckigen Querschnitt auf. Die Stütz-Halbschalen 14 bzw. 15 weisen in der Umgebung der Führungsöffnungen 16 jeweils eine im wesentlichen flache Anlage-Fläche 17 auf. Die Befestigungs-Arme 11 bzw. 12 weisen im Bereich ihres freien Endes senkrecht zu den Mittel-Längs-Achsen 5 bzw. 6 DurchgangsBohrungen 18 auf, die konzentrisch zu entsprechenden Schwenk-Achsen 19 bzw. 20 verlaufen. Die Schwenk-Achsen 19 und 20 liegen auf einer gemeinsamen Achse.

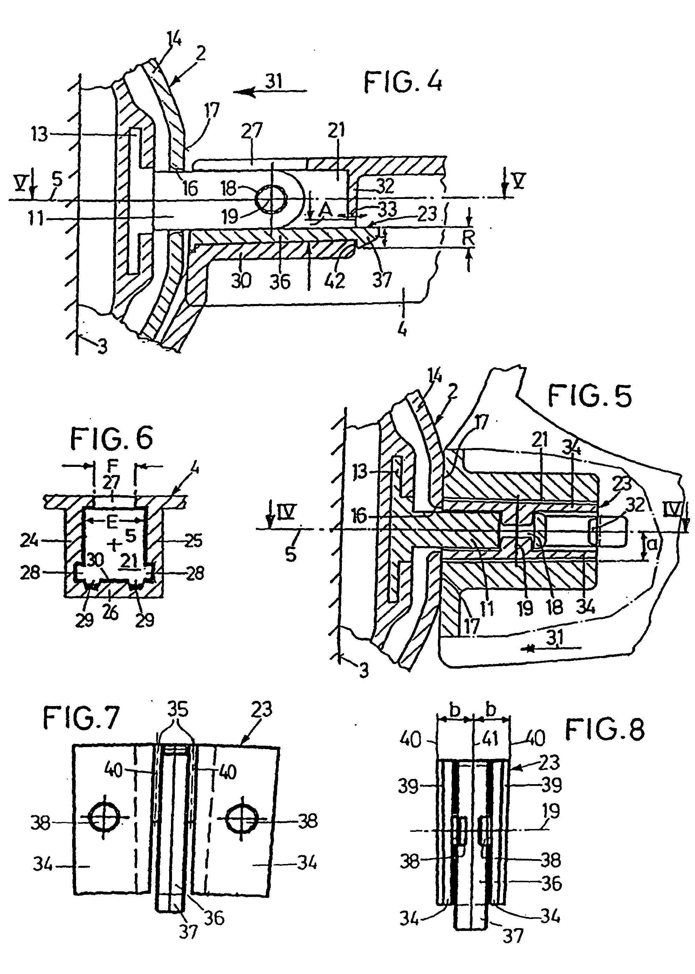

Der Ablage-Körper 4 weist auf der den Saug-Elementen 2 zugewandten Seite zur Aufnahme der Befestigungs-Arme 11 und 12 Einführ-Kanäle 21 bzw. 22 auf. Die Befestigungs-Arme 11 und 12 sind in den Einführ-Kanälen 21 bzw. 22 über Verbindungs-Elemente 23 befestigt. Die Einführ-Kanäle 21 bzw. 22 weisen jeweils zwei Seitenwände 24 und 25 sowie einen Boden 26 auf, die im Querschnitt die Form eines U haben und einteilig mit dem Ablage-Körper 4 ausgebildet sind. Im in Fig. 6 oberen Bereich ist ein Führungsschlitz 27 vorgesehen, der sich entlang der Mittel-Längs-Achsen 5 bzw. 6 beginnend von dem den Saug-Elementen 2 zugewandten Ende über einen Teil der Länge der Einführ-Kanäle 21 bzw. 22 erstreckt. Die Breite F des Führungsschlitzes 27 ist kleiner als die Breite E der Einfähr-Kanäle 21 bzw. 22 und breit genug, um die Befestigungs-Arme 11 bzw. 12 aufzunehmen. Im unteren seitlichen Bereich der Einführ-Kanäle 21 bzw. 22 sind längsverlaufende Führungs-Nuten 28 beidseitig vorgesehen. Gleichermaßen sind im Bereich des Bodens 26 der Einführ-Kanäle 21 bzw. 22 jeweils seitlich Nuten 29 vorgesehen, die einen mittig verlaufenden Gleitsteg 30 begrenzen. Die Seitenwände 24 und 25 schließen mit den Mittel-Längs-Achsen 5 bzw. 6 einen Winkel von 0,1° ≤ a ≤ 5°, insbesondere a = 1°, ein und verjüngen sich entgegen einer Einschub-Richtung 31. Am entgegen der Einschub-Richtung 31 gelegenen Ende der Einführ-Kanäle 21 bzw. 22 ist ein im wesentlichen senkrecht zu den Mittel-Längs-Achsen 5 bzw. 6 verlaufender, an einem Ende 33 freier Arretier-Zapfen 32 ausgebildet. Dessen freies Ende 33 ist entlang der Achsen 5 bzw. 6 verschwenkbar und elastisch ausgebildet.

Das Verbindungs-Element 23 weist zwei Seitenplatten 34 auf, die über Filmscharniere 35 an gegenüberliegenden Seiten eines Rastarms 36 ausgebildet sind. Die Filmscharniere 35 erstrecken sich nur über einen Teil der Länge des Rastarms 36, so daß dieser im wesentlichen senkrecht zu seiner Längsrichtung verschwenkbar ist. Der Rastarm 36 ist elastisch ausgebildet. An seinem freien Ende weist der Rastarm 36 eine Rastnase 37 auf. Die Seiten-Platten 34 weisen jeweils mittig einen Schwenk-Zapfen 38 auf. Die Schwenk-Zapfen 38 weisen in der in Fig. 7 dargestellten Anordnung des Verbindungs-Elementes 23 in die entgegengesetzte Richtung wie die Rastnase 37. Die Seiten-Platten 34 weisen auf der den Schwenk-Zapfen 38 gegenüberliegenden Seite im Bereich der Filmscharniere 35 jeweils einen längsverlaufenden Führungssteg 39 auf. Die Seiten-Platten 34 sind um die Filmscharniere 35 bezüglich Schwenk-Achsen 40 verschwenkbar. Der Rastarm 36 weist eine Mittel-Längs-Achse 41 auf. Die Schwenk-Achsen 40 schließen jeweils mit der Mittel-Längs-Achse 41 einen Winkel b ein, für den gilt: b = a, und insbesondere b ≅ 1°. An dem den Saug-Elementen 2 zugewandten Ende des Ablage-Körpers 4 sind im Bereich der Einführ-Kanäle 21 bzw. 22, wie in Fig. 2 gezeigt, schräg nach unten vorspringende Stützarme 43 vorgesehen. Die Stütz-Halbschalen 14, 15, die Verbindungs-Elemente 23 sowie der Ablage-Körper 4 sind vorzugsweise aus Polypropylen gefertigt.

Im folgenden wird die Montage der Ablage-Vorrichtung 1 beschrieben. Die Einheiten aus Saug-Napf 7 bzw. 8 und Befestigungs-Arm 11 bzw. 12 bilden den Ausgangspunkt. Der Befestigungs-Arm 11 bzw. 12 wird durch die Führungsöffnung 16 der Stütz-Halbschale 14 geschoben. Anschließend wird das Verbindungs-Element 23 nach Art eines U um den Befestigungs-Arm 11 bzw. 12 gelegt, so daß die Schwenk-Zapfen 38 in Eingriff mit der Durchgangs-Bohrung 18 kommen und der Rastarm 36 in dieselbe Richtung wie der Befestigungs-Arm 11 bzw. 12 weist. Anschließend wird die Einheit aus Verbindungs-Element 23 und Befestigungs-Arm 11 bzw. 12 in die Einführ-Kanäle 21 bzw. 22 geschoben, wobei die Führungsstege 39 in den Führungs-Nuten 28 geführt sind, und die Unterseite des Rastarms 36 auf dem Gleitsteg 30 gleitet. Sobald das freie Ende des Rastarms 36 das Ende 33 des Arretier-Zapfens 32 erreicht, wird dieser verschwenkt und gibt den Weg für die Rastnase 37 frei. Die Höhe R der Rastnase 37 ist relativ zum Abstand A des Endes 33 zur gegenüberliegenden Seite des Einführ-Kanals 21 bzw. 22 so gewählt, daß gilt: R > A. Beim weiteren Einschieben der Befestigungs-Arme 11 bzw. 12 rastet die Rastnase 37 hinter eine am entgegen der Einschub-Richtung 31 gelegenen Ende des Einführ-Kanals 21 bzw. 22 angeordnete Anschlagkante 42. Gleichzeitig wird der Arretier-Zapfen 32 wieder in seine Ausgangsposition verschwenkt. Durch die Wechselwirkung von Rastnase 37 und Arretier-Zapfen 32 entsteht eine doppelte Arretierung. Ein Anheben des Rastarms 36 genügt nicht zur Lösung der Rastverbindung, da dieser lediglich bis zur Position des Endes 33 des Arretier-Zapfens 32 angehoben werden kann, und die Rastnase 37 auch noch in dieser Position mit der Anschlagkante 42 verrastet ist. Zur Lösung der Rastverbindung muß zusätzlich das Ende 33 verschwenkt werden, bis der Rastarm 36 soweit angehoben werden kann, daß die Rastnase 37 über die Anschlagkante 42 hinweggehoben und das Verbindungs-Element 23 aus dem Einführ-Kanal 21 bzw. 22 gezogen werden kann. Die Verbindung der Befestigungs-Arme 11 und 12 mit den Einführ-Kanälen 21 bzw. 22 findet in der gleichen Weise statt. Durch die konische Ausbildung der Verbindungs-Elemente 23 und Einführ-Kanäle 21 bzw. 22 wird die maximale und ideale Einschubtiefe der Befestigungs-Arme 11 bzw. 12 vorgegeben.

Im folgenden wird die Anbringung der Ablage-Vorrichtung 1 an der Wand 3 beschrieben. In der in Fig. 3 dargestellten Montageposition des Ablage-Körpers 4, d. h. nach oben geklappt, werden die beiden Saug-Elemente an die Wand 3 angesetzt. Anschließend wird der Ablage-Körper 4 in die in Fig. 2 gezeigten Gebrauchs-Position um ungefähr 90° nach unten verschwenkt. Der Abstand der Schwenk-Achsen 19 bzw. 20 von der Anlage-Fläche 17 wird in der Montageposition mit M bezeichnet. In der Gebrauchs-Position wird der Abstand zwischen der Schwenk-Achse 19 bzw. 20 und der Anlage-Fläche 17 mit B bezeichnet. Es gilt: B > M. Durch diese Dimensionierung wird erreicht, daß der Mittelabschnitt 10 der Saug-Näpfe 7 bzw. 8 beim Verschwenken des Ablage-Körpers 4 aus der Montageposition in die Gebrauchs-Position von der Wand 3 weggezogen wird, wodurch in dem Zwischenraum zwischen Saug-Napf 7 bzw. 8 und der Wand 3 ein Unterdruck entsteht, der die Ablage-Vorrichtung 1 an der Wand hält. In der Gebrauchs-Position sind die Stützarme 43 an den Stütz-Halbschalen 14 bzw. 15 abgestützt, so daß die Belastbarkeit der Ablage-Vorrichtung 1 durch Gegenstände erhöht wird.

## Patentansprüche

1. Ablage-Vorrichtung (1) für Gegenstände, insbesondere für Badezimmer-Gegenstände
a) mit mindestens einem Saug-Element (2) zur Saughalterung an einer Wand (3), welches
i) einen Saug-Napf (7, 8) zur Anordnung desselben an der Wand (3) und zur Erzeugung eines Unterdrucks zwischen diesem und der Wand (3) und
ii) einen Befestigungs-Arm (11, 12), der mit dem Saug-Napf (7, 8) verbunden ist und von diesem absteht, aufweist und
b) mit einem Ablage-Körper (4) zur Aufnahme von Gegenständen, welcher mit dem Befestigungs-Arm (11, 12) um eine Schwenk-Achse (19, 20) von einer Montage-Position, in der der Saug-Napf (7, 8) nicht an der Wand (3) angesaugt ist, in eine Gebrauchs-Position, in der der Saug-Napf (7, 8) an der Wand (3) angesaugt ist, schwenkbar verbunden ist,
c) wobei der Ablage-Körper (4) mindestens einen Einführ-Kanal (21, 22) zur Aufnahme des mindestens einen Befestigungs-Armes (11, 12) aufweist,
d) wobei der mindestens eine Befestigungs-Arm (11, 12) mit dem mindestens einen Einführ-Kanal (21, 22) über ein Verbindungs-Element (23) verbunden ist,
**dadurch gekennzeichnet, daß**
e) das Verbindungs-Element (23) aufweist
i) zwei jeweils endseitig in eine Durchgangs-Bohrung (18) des Befestigungs-Arms (11, 12) eingreifende Schwenk-Zapfen (38) zur Führung von Verschwenkungen des Ablage-Körpers (4) um die Schwenk-Achse (19, 20) und
ii) einen elastischen Rastarm (36) mit einer Rastnase (37) zur Verrastung mit dem Ablage-Körper (4).

2. Ablage-Vorrichtung (1) gemäß Anspruch 1, **dadurch gekennzeichnet, daß**
a) ein erstes Saug-Element (2) vorgesehen ist, welches mit dem Ablage-Körper (4) um eine erste Schwenk-Achse (19) schwenkbar verbunden ist und
b) ein zweites Saug-Element (2) vorgesehen ist, das mit dem Ablage-Körper (4) um eine zweite Schwenk-Achse (20) schwenkbar verbunden ist, wobei
c) die erste Schwenk-Achse (19) und die zweite Schwenk-Achse (20) auf einer gemeinsamen Achse liegen.

3. Ablage-Vorrichtung (1) gemäß Anspruch 1 oder 2, **dadurch gekennzeichnet, daß** das mindestens eine Saug-Element (2) eine den Saug-Napf (7, 8) zumindest teilweise abdeckende Stütz-Halbschale (14, 15) aufweist, durch die der Befestigungs-Arm (11, 12) verschiebbar geführt ist.

4. Ablage-Vorrichtung (1) gemäß Anspruch 3, **dadurch gekennzeichnet, daß** an der Außenseite der Stütz-Halbschale (14, 15) in der Umgebung der Durchführung des Befestigungs-Armes (11, 12) eine Anlage-Fläche (17) vorgesehen ist.

5. Ablage-Vorrichtung (1) gemäß Anspruch 4, **dadurch gekennzeichnet, daß** die Schwenk-Achse (19, 20) von der Anlage-Fläche (17) in der Montage-Position einen Abstand M aufweist und die Schwenk-Achse (19, 20) in der Gebrauchs-Position von der Anlage-Fläche (17) einen Abstand B aufweist, wobei für die Abstände gilt: B > M.

6. Ablage-Vorrichtung (1) gemäß Anspruch 1, **dadurch gekennzeichnet, daß** die Durchgangs-Bohrung (18) zur Schwenk-Achse (19, 20) konzentrisch ist.

7. Ablage-Vorrichtung (1) gemäß Anspruch 1, **dadurch gekennzeichnet, daß** der Ablage-Körper (4) einen quer zu einer Einschub-Richtung (31) des mindestens einen Befestigungs-Armes (11, 12) in den mindestens einen Einführ-Kanal (21, 22) verlaufenden Arretier-Zapfen (32) aufweist.

8. Ablage-Vorrichtung (1) gemäß Anspruch 7, **dadurch gekennzeichnet, daß** der Arretier-Zapfen (32) derart angeordnet ist, daß er eine Lösung der Rastverbindung zwischen Rastarm (36) und Ablage-Körper (4) verhindert.

## Claims

1. A tray arrangement (1) for objects, in particular bathroom objects, comprising
a) at least one suction element (2) for attachment by suction on a wall (3),
i) which comprises a sucker (7, 8) for arrangement thereof on the wall (3) and for creation of a vacuum there-between and the wall (3), and
ii) a fastening arm (11, 12) which is connected to the sucker (7, 8), standing out therefrom; and
b) a tray (4) for placement of objects, which is connected to the fastening arm (11, 12) for being pivoted about a pivoting axis (19, 20) from a position of mounting, with the sucker (7, 8) not applied by suction to the wall (3) into a position of use, with the sucker (7, 8) applied by suction to the wall (3);
c) the tray (4) comprising at least one lead-in (21, 22) for accommodation of the at least one fastening arm (11, 12);
d) the at least one fastening arm (11, 12) being connected to the at least one lead-in (21, 22) by way of a connecting element (23);
**characterized**
e) in that the connecting element (23) comprises
i) two pivots (38), which engage with a through hole (18) of the fastening arm (11, 12) on the side of the ends, for guidance of pivoted motions of the tray (4) about the pivoting axis (19, 20); and
ii) a flexible locking arm (36) with a locking projection (37) for locking engagement with the tray (4).

2. A tray arrangement (1) according to claim 1, **characterized**
a) in that a first suction element (2) is provided, which is connected to the tray (4) pivotably about a first pivoting axis (19); and
b) in that a second suction element (2) is provided, which is connected to the tray (4) pivotably about a second pivoting axis (20);
c) wherein the first pivoting axis (19) and the second pivoting axis (20) are on a common axis.

3. A tray arrangement (1) according to claim 1 or 2, **characterized in that** the at least one suction element (2) comprises a supporting shell (14, 15) which at least sectionally covers the sucker (7, 8) and through which the fastening arm (11, 12) is displaceably passed.

4. A tray arrangement (1) according to claim 3, **characterized in that** a contact surface (17) is provided on the outside of the supporting shell (14, 15) in the vicinity of where the fastening arm (11, 12) is passed through.

5. A tray arrangement (1) according to claim 4, **characterized in that** the pivoting axis (19, 20) has a distance M from the contact surface (17) in the position of mounting, and **in that** the pivoting axis (19, 20) has a distance B from the contact surface (17) in the position of use, with B > M applying to the distances.

6. A tray arrangement (1) according to claim 1, **characterized in that** the through hole (18) is concentric of the pivoting axis (19, 20).

7. A tray arrangement (1) according to claim 1, **characterized in that** the tray (4) comprises a locking pin (32) which extends crosswise of a direction of insertion (31) of the at least one fastening arm (11, 12) into the at least one lead-in (21, 22).

8. A tray arrangement (1) according to claim 7, **characterized in that** the locking pin (32) is disposed for precluding any detachment of the locking connection between the locking arm (36) and the tray (4).

## Revendications

1. Tablette (1) destinée à des objets, notamment à des objets de salles de bains,
a) comprenant au moins un élément de ventousage (2) en vue de la retenue sur une paroi (3) par aspiration, lequel élément comporte
i) une ventouse (7, 8) conçue pour être installée sur la paroi (3), et pour engendrer une dépression entre elle-même et ladite paroi (3), et
ii) un bras de fixation (11, 12) relié à la ventouse (7, 8) et faisant saillie au-delà de cette dernière ; et
b) un reposoir (4) qui est destiné à recevoir des objets et est relié au bras de fixation (11, 12) avec faculté de pivotement, autour d'un axe de pivotement (19, 20), depuis une position de montage dans laquelle la ventouse (7, 8) n'est pas plaquée contre la paroi (3) par aspiration, jusqu'à une position d'utilisation dans laquelle ladite ventouse (7, 8) est plaquée contre ladite paroi (3) par aspiration,
c) le reposoir (4) présentant au moins un canal d'insertion (21, 22) pour recevoir le bras de fixation (11, 12) prévu au minimum,
d) ledit bras de fixation (11, 12), prévu au minimum, étant relié par l'intermédiaire d'un élément de solidarisation (23) audit canal d'insertion (21, 22) prévu au minimum,
**caractérisée par le fait que**
e) l'élément de solidarisation (23) est muni
i) de deux tenons de pivotement (38) pénétrant respectivement, aux extrémités, dans un trou de passage (18) du bras de fixation (11, 12) prévu au minimum, en vue de guider des pivotements du reposoir (4) autour de l'axe de pivotement (19, 20), et
ii) d'un bras élastique (36) à déclic, doté d'un bec encliquetable (37) en vue de l'encliquetage sur ledit reposoir (4).

2. Tablette (1) selon la revendication 1, **caractérisée par** le fait
a) qu'il est prévu un premier élément de ventousage (2) relié au reposoir (4) avec faculté de pivotement autour d'un premier axe de pivotement (19), et
b) qu'il est prévu un second élément de ventousage (2) relié audit reposoir (4) avec faculté de pivotement autour d'un second axe de pivotement (20), sachant que
c) ledit premier axe de pivotement (19) et ledit second axe de pivotement (20) se trouvent sur un axe commun.

3. Tablette (1) selon la revendication 1 ou 2, **caractérisée par le fait que** l'élément de ventousage (2), prévu au minimum, présente une demi-coquille d'appui (14, 15) qui recouvre au moins partiellement la ventouse (7, 8), et à travers laquelle le bras de fixation (11, 12) est guidé à coulissement.

4. Tablette (1) selon la revendication 3, **caractérisée par le fait qu'**une surface de contact (17) est prévue à la face extérieure de la demi-coquille d'appui (14, 15), au voisinage de la traversée du bras de fixation (11, 12).

5. Tablette (1) selon la revendication 4, **caractérisée par le fait que** l'axe de pivotement (19, 20) est séparé d'avec la surface de contact (17) d'une distance M, dans la position de montage, et ledit axe de pivotement (19, 20) est séparé d'avec ladite surface de contact (17) d'une distance B, dans la position d'utilisation, lesdites distances obéissant à la relation B > M.

6. Tablette (1) selon la revendication 1, **caractérisée par le fait que** le trou de passage (18) est concentrique à l'axe de pivotement (19, 20).

7. Tablette (1) selon la revendication 1, **caractérisée par le fait que** le reposoir (4) comporte un ergot d'arrêt (32) s'engageant, dans le canal d'insertion (21, 22) prévu au minimum, transversalement par rapport à une direction d'insertion (31) du bras de fixation (11, 12) prévu au minimum.

8. Tablette (1) selon la revendication 7, **caractérisée par le fait que** l'ergot d'arrêt (32) est disposé de manière à empêcher une dissociation de la solidarisation encliquetée entre le bras (36) à déclic et le reposoir (4).
